# EUROPÄISCHE PATENTSCHRIFT

(11) **EP 3 502 164 B1**
(45) Veröffentlichungstag und Bekanntmachung des Hinweises auf die Patenterteilung: **05.10.2022**
(21) Anmeldenummer: 17210050.5
(22) Anmeldetag: 22.12.2017
(51) Int. Cl.: C08G 69/26, C08L 77/06

(54) **POLYAMID-FORMMASSE**
POLYAMIDE MOULDING MATERIAL
MASSE DE FORMAGE EN POLYAMIDE

(43) Veröffentlichungstag der Anmeldung: 26.06.2019
(73) Patentinhaber: EMS-CHEMIE AG, 7013 Domat/Ems (CH)
(72) Erfinder: Wiedemann, Thomas, 7013 Domat/Ems (CH); Hoffmann, Botho, 7013 Domat/Ems (CH)
(74) Vertreter: Pfenning, Meinig & Partner mbB

(56) Entgegenhaltungen:
- EP-A1- 1 992 659
- EP-A1- 2 952 319
- EP-A1- 3 444 113
- US-A- 6 008 288

## Beschreibung

Die vorliegende Erfindung betrifft Polyamid-Formmassen, die auf einer Mischung spezifischer amorpher Polyamide und spezifischer teilkristalliner Polyamide beruhen und die sich durch eine sehr gute Spannungsrissbeständigkeit und gleichzeitig durch sehr gute optische Eigenschafen, insbesondere eine hohe Lichttransmission und einen tiefen Haze, auszeichnen.

Weiterhin betrifft die vorliegende Erfindung Formkörper aus der erfindungsgemäßen Polyamid-Formmasse und Verwendungen der Polyamid-Formmasse, zur Herstellung von Dekorelementen, insbesondere im Automobilinnenraum oder Modebereich, Sportartikeln, insbesondere Skischuhen, Zwischensohlen für Sportschuhe, Freizeitartikeln, Spielzeugen, insbesondere Konstruktionselementen, Bausteinen, Figuren oder Modellen, Haushaltsartikeln, insbesondere Behältern, Schüsseln, Schalen, Dosen, Bechern, Babyflaschen oder Trinkflaschen, Bauteilen von Küchengeräten, Bauteilen von Brillen, insbesondere Brillenrahmen oder Brillenbügeln, insbesondere für Sicherheitsbrillen, Sportbrillen oder Skibrillen, Möbelbeschlägen, Einlegesohlen, Bau- und Sichtteilen für Geräte im Sanitär-, Hygiene- und Kosmetikbereich, Teilen von Sicherheitsschuhen, insbesondere Kappen, Filtertassen, Schaugläsern, Durchflussmessern, Berstscheiben, Behältern, Gehäusen oder Gehäuseteilen für Elektro- und Elektronikgeräte, insbesondere für Rasierapparate, Epiliergeräte, Messgeräte, Infrarotschlüssel, Mobiltelefone, Abspielgeräte, Personal Digital Assistants (PDA), Smartphones oder Speichermedien (z.B. USB-Sticks), Schutzhüllen für Mobiltelefone, Sichtteilen im Computer und Telekommunikationsbereich, Rohren, Schläuchen und Bauteilen von E-Zigaretten.

Mischungen aus amorphen und teilkristallinen Polyamiden sind bereits im Stand der Technik beschrieben.

EP 1 992 659 A1 beschreibt eine Polyamid-Formmassen-Schmelze zur Herstellung von transparenten Formteilen, die für Licht bis zu einer Wellenlänge von 400 nm eine reduzierte Transmission aufweisen. Die Polyamid-Formmasse basiert auf einer Mischung von transparenten Polyamiden oder einem Blend von transparenten Polyamiden mit zumindest einem teilkristallinen Polyamid.

EP 2 952 319 A1 betrifft ein Verfahren zum spannungsarmen Spritzgießen von amorphen oder mikrokristallinen Polyamiden, bei dem eine Schmelze der amorphen oder mikrokristallinen Polyamide bei bestimmten Bedingungen verarbeitet und spritzgegossen wird. Somit lassen sich spannungsarme Formkörper aus den amorphen oder mikrokristallinen Polyamiden durch Spritzguss herstellen. Dabei kann ein Teil des amorphen oder mikrokristallinen Polyamids durch ein teilkristallines Polyamid ersetzt sein.

US 2016/0369098 A1 betrifft die Verwendung mindestens eines teilkristallinen Polyamids in einem Glas-verstärkten amorphen Polyamidharz, um eine Zusammensetzung herzustellen, die transparenter ist als das Harz.

US 6,008,288 beschreibt farblose, amorphe Polyamide, deren Blends oder Legierungen und Formkörper mit hoher Wechselbiegesteifigkeit. Diese sind bevorzugt aus cycloaliphatischen Diaminen und aliphatischen Dicarbonsäuren und kleinen Mengen aromatischer Dicarbonsäuren aufgebaut und zeigen gleichzeitig eine hohe Zähigkeit, Steifheit, Wärmeformbeständigkeit und Lösemittelbeständigkeit.

Ausgehend davon bestand die Aufgabe eine Polyamid-Formmasse bereitzustellen, die gegenüber dem unmodifizierten Basiscopolyamid (A) eine verbesserte Spannungsrissbeständigkeit zeigt, bei möglichst geringen Einbußen betreffend der optischen Eigenschaften, ausgedrückt durch einen tiefen Haze und eine hohe Lichttransmission.

Diese Aufgabe wird durch die Polyamid-Formmasse gemäß Anspruch 1 gelöst, welche die folgenden Merkmale aufweist.

Polyamid-Formmasse enthaltend die folgenden Komponenten (A) bis (C) oder bestehend aus diesen Komponenten:
(A) 69 bis 94,7 Gew.-% mindestens eines amorphen Copolyamids gebildet aus den Monomeren (a1) bis (a4):
   (a1) 50 bis 80 Mol-% mindestens eines acyclischen, aliphatischen Diamins mit 6 bis 10 Kohlenstoffatomen;
   (a2) 20 bis 50 Mol-% mindestens eines cycloaliphatischen Diamins mit 6 bis 36 Kohlenstoffatomen;
   (a3) 40 bis 80 Mol-% mindestens einer aromatischer Dicarbonsäure;
   (a4) 20 bis 60 Mol-% mindestens einer acyclischen, aliphatischen Dicarbonsäure mit 8 bis 16 Kohlenstoffatomen;
   wobei die Anteile der Monomere (a1) und (a2) bezogen auf die Summe der eingesetzten Diamine sind und sich in Summe auf 100 Mol-% ergänzen; und
   wobei die Anteile der Monomere (a3) und (a4) bezogen auf die Summe der eingesetzten Dicarbonsäuren sind und sich in Summe auf 100 Mol% ergänzen;
(B) 5 bis 25 Gew.-% mindestens eines teilkristallinen Polyamids ausgewählt aus der Gruppe bestehend aus PA 516, PA 612, PA 6/12, PA 614, PA 616, PA 618, PA 1012, PA 1014, PA 1016, PA 1018, und Mischungen hiervon; und
(C) 0,3 bis 6 Gew.-% mindestens eines Zusatzstoffes;
   wobei sich die Mengenanteile der Komponenten (A) bis (C) in Summe auf 100 Gew.-% ergänzen.

Vorteilhafte Ausführungsformen der erfindungsgemäßen Polyamid-Formmasse werden in den Ansprüchen 2 bis 12 angegeben.

Weiterhin betrifft die vorliegende Erfindung gemäß Anspruch 13 Formkörper herstellbar aus der erfindungsgemäßen Polyamid-Formmasse. Vorteilhafte Ausführungsformen dieser Formkörper werden in Anspruch 14 angegeben und Anspruch 15 betrifft Verwendungen der erfindungsgemäßen Polyamid-Formmasse.

### Begriffsdefinitionen

### Schreibweisen und Abkürzungen für Polyamide und deren Monomere

Im Sinne der vorliegenden Erfindung wird unter dem Begriff "Polyamid" (Abkürzung PA) ein Oberbegriff verstanden, dieser umfasst Homopolyamide und Copolyamide. Die gewählten Schreibweisen und Abkürzungen für Polyamide und deren Monomere entsprechen den in der ISO-Norm 16396-1 (2015, (D)) festgelegten. Die darin verwendeten Abkürzungen werden im Folgenden synonym zu den IUPAC Namen der Monomere verwendet. Insbesondere kommen folgende Abkürzungen für Monomere in der vorliegenden Anmeldung vor MACM für Bis(4-amino-3-methyl-cyclohexyl)methan (auch als 3,3'-Dimethyl-4,4'-diaminodicyclohexylmethan bezeichnet, CAS-Nr. 6864-37-5), EACM für Bis(4-amino-3-ethyl-cyclohexyl)methan (auch als 3,3'-Diethyl-4,4'-diaminodicyclohexylmethan bezeichnet, CAS-Nr. 1064114-65-3), TMDC für Bis(4-amino-3,5-dimethyl-cyclohexyl)methan (auch als 3,3',5,5'-Tetramethyl-4,4'-diaminodicyclohexylmethan bezeichnet, CAS-Nr. 65962-45-0), PACP für 2,2-Bis(p-amino-cyclohexyl)propan (CAS-Nr. 3377-24-0), PACM für Bis(4-amino-cyclohexyl)methan (auch als 4,4'-Diaminodicyclohexylmethan bezeichnet, CAS-Nr. 1761-71-3), T für Terephthalsäure (CAS-Nr. 100-21-0), I für Isophthalsäure (CAS-Nr. 121-95-5), 12 für Dodecandisäure (auch 1,10-Decandicarbonsäure genannt, CAS-Nr. 693-23-2), 16 für Hexadecandisäure (CAS-Nr. 505-54-4), 6 für 1,6-Hexandiamin (CAS-Nr. 124-09-4), 12 für Laurinlactam (CAS-Nr. 947-04-6) und 12 für ω-Aminododecansäure (CAS-Nr. 693-57-2).

### Amorphe Polyamide

Amorphe Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 5 J/g, besonders bevorzugt von maximal 3 J/g und ganz besonders bevorzugt von 0 bis 1 J/g und weisen keinen Schmelzpunkt auf.

### Mikrokristalline Polyamide

Mikrokristalline Polyamide besitzen einen Schmelzpunkt. Des Weiteren zeigen sie eine höhere Schmelzwärme als amorphe Polyamide.

### Allgemeines zu Mengenangaben

Die Polyamid-Formmassen gemäß der vorliegenden Erfindung enthalten die Komponenten (A), (B) und (C) oder bestehen bevorzugt ausschließlich aus diesen, es gilt dabei die Maßgabe, dass sich die Komponenten (A), (B) und (C) in Summe auf 100 Gew.-% ergänzen. Die festgelegten Bereiche der Mengenangaben für die einzelnen Komponenten (A), (B) und (C) sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller Komponenten (A) bis (C) 100 Gew.-% ergibt.

Die im Copolypolyamid (A) enthaltenen Diamin-Monomere (a1) und (a2) ergänzen sich in Summe auf 100 Mol-% und die im Copolyamid (A) enthaltenen Disäure-Monomere (a3) und (a4) ergänzen sich ebenso in Summe auf 100 Mol-%. Die festgelegten Bereiche der Mengenangaben für die einzelnen Monomere sind so zu verstehen, dass innerhalb der vorgegebenen Bereiche eine willkürliche Menge für jede der Einzelkomponenten ausgewählt werden kann, sofern die strikte Maßgabe erfüllt wird, dass die Summe aller im Copolyamid (A) enthaltenen Diamin-Monomere und Disäure-Monomere jeweils 100 Mol-% ergibt.

### Polyamid-Formmasse

Die erfindungsgemäße Polyamid-Formmasse enthält die Komponenten (A) bis (C) oder besteht aus diesen.

Gemäß einer bevorzugten Ausführungsform der vorliegenden Erfindung liegt der Anteil von Komponente (A) in der Polyamid-Formmasse im Bereich von 76 bis 91,5 Gew.%, bezogen auf das Gesamtgewicht der Polyamid-Formmasse.

Nach einer weiteren bevorzugten Ausführungsform vorliegender Erfindung liegt der Anteil von Komponente (B) in der Polyamid-Formmasse im Bereich von 8 bis 20 Gew.%, und ganz besonders bevorzugt 10 bis 15 Gew.-% bezogen auf das Gesamtgewicht der Polyamid-Formmasse.

Eine weitere bevorzugte Ausführungsform sieht vor, dass der Anteil von Komponente (C) in der Polyamid-Formmasse im Bereich 0,5 bis 4 Gew.-% bezogen auf das Gesamtgewicht der Polyamid-Formmasse liegt.

Gemäß einer bevorzugten Ausführungsform der vorliegenden Erfindung liegt der Anteil von Komponente (A) in der Polyamid-Formmasse im Bereich von 76 bis 91,5 Gew.% und der Anteil von Komponente (B) in der Polyamid-Formmasse im Bereich 8 bis 20 Gew.% und bevorzugt 10 bis 15 Gew.-% und der Anteil von Komponente (C) in der Polyamid-Formmasse im Bereich von von 0,5 bis 4 Gew.-%, jeweils bezogen auf das Gesamtgewicht der Polyamid-Formmasse. Nach einer anderen bevorzugten Ausführungsform der vorliegenden Erfindung liegt der an einem aus der Polyamid-Formmasse hergestellten Formkörper (2 mm dicke Platten mit Breite und Länge: 60 x 60 mm) nach ASTM D1003 gemessene Haze der Polyamid-Formmasse, < 15 %, bevorzugt < 10 %, besonders bevorzugt < 8 % und ganz besonders bevorzugt < 1,0 %.

Eine weitere bevorzugte Ausführungsform der vorliegenden Erfindung sieht vor, dass die an einem aus der Polyamid-Formmasse hergestellten Formkörper (2 mm dicke Platten mit Breite und Länge: 60 x 60 mm) nach ASTM D1003 gemessene Lichttransmission mindestens 80 %, bevorzugt mindestens 85 % und besonders bevorzugt mindestens 90 % beträgt.

Gemäß einer bevorzugten Ausführungsform der vorliegenden Erfindung weist ein Prüfkörper aus der erfindungsgemäßen Polyamid-Formmasse
- einen Zug-E-Modul bestimmt nach ISO 527 von mindestens 2000 MPa, bevorzugt mindestens 2100 MPa und besonders bevorzugt mindestens 2150 MPa auf; und/oder
- eine Spannungsrissbeständigkeit in Diethylenglykol bestimmt nach DIN 53449-3 (1984) Biegestreifenverfahren von mindestens 12 MPa, bevorzugt mindestens 22 MPa und besonders bevorzugt mindestens 27 MPa auf; und/oder
- eine Spannungsrissbeständigkeit in Toluol bestimmt nach DIN 53449-3 (1984) Biegestreifenverfahren von mindestens 17 MPa, bevorzugt mindestens 27 MPa und besonders bevorzugt mindestens 30 MPa auf; und/oder
- eine Spannungsrissbeständigkeit in n-Hexan bestimmt nach DIN 53449-3 (1984) Biegestreifenverfahren von mindestens 23 MPa, bevorzugt mindestens 30 MPa und besonders bevorzugt mindestens 35 MPa auf.

Eine andere bevorzugte Ausführungsform sieht vor, dass ein Prüfkörper aus der erfindungsgemäßen Polyamid-Formmasse
- einen Zug-E-Modul bestimmt nach ISO 527 von mindestens 2000 MPa, bevorzugt mindestens 2100 MPa und besonders bevorzugt mindestens 2150 MPa aufweist; und/oder
- eine Spannungsrissbeständigkeit in Diethylenglykol bestimmt nach DIN 53449-3 (1984) Biegestreifenverfahren von mindestens 12 MPa, bevorzugt mindestens 22 MPa und besonders bevorzugt mindestens 27 MPa aufweist; und/oder
- eine Spannungsrissbeständigkeit in Toluol bestimmt nach DIN 53449-3 (1984) Biegestreifenverfahren von mindestens 17 MPa, bevorzugt mindestens 27 MPa und besonders bevorzugt mindestens 30 MPa aufweist; und/oder
- eine Spannungsrissbeständigkeit in n-Hexan bestimmt nach DIN 53449-3 (1984) Biegestreifenverfahren von mindestens 23 MPa, bevorzugt mindestens 30 MPa und besonders bevorzugt mindestens 35 MPa aufweist; und
der an einem aus der Polyamid-Formmasse hergestellten Formkörper (2 mm dicke Platten mit Breite und Länge: 60 x 60 mm) nach ASTM D1003 gemessene Haze der Polyamid-Formmasse, < 15 %, bevorzugt < 10 %, besonders bevorzugt < 8 % und ganz besonders bevorzugt < 1,0 % beträgt; und
die an einem aus der Polyamid-Formmasse hergestellten Formkörper (2 mm dicke Platten mit Breite und Länge: 60 x 60 mm) nach ASTM D1003 gemessene Lichttransmission mindestens 80 %, bevorzugt mindestens 85 % und besonders bevorzugt mindestens 90 % beträgt.

Gemäß einer bevorzugten Ausführungsform der vorliegenden Erfindung ist die erfindungsgemäße Polyamid-Formmasse frei von Glasfasern.

In einer besonders bevorzugten Ausführungsform ist die erfindungsgemäße Polyamid-Formmasse frei von faserförmigen Füllstoffen.

Gemäß einer bevorzugten Ausführungsform enthält die Formmasse genau ein Copolyamid (A) und genau ein teilkristallines Polyamid (B).

Im Folgenden werden bevorzugte Ausführungsformen für die Komponenten (A) bis (C) angegeben.

### Komponente (A)

Komponente (A) ist zumindest ein amorphes Copolyamid gebildet aus den Monomeren (a1) bis (a4):
(a1) 50 bis 80 Mol-% mindestens eines acyclischen, aliphatischen Diamins mit 6 bis 10 Kohlenstoffatomen;
(a2) 20 bis 50 Mol-% mindestens eines cycloaliphatischen Diamins mit 6 bis 36 Kohlenstoffatomen;
(a3) 40 bis 80 Mol-% mindestens einer aromatischer Dicarbonsäure;
(a4) 20 bis 60 Mol-% mindestens einer acyclischen, aliphatischen Dicarbonsäure mit 8 bis 16 Kohlenstoffatomen;
wobei die Anteile der Monomere (a1) und (a2) bezogen auf die Summe der eingesetzten Diamine sind und sich in Summe auf 100 Mol-% ergänzen; und wobei die Anteile der Monomere (a3) und (a4) bezogen auf die Summe der eingesetzten Dicarbonsäuren sind und sich in Summe auf 100 Mol-% ergänzen.

Gemäß einer bevorzugten Ausführungsform vorliegender Erfindung handelt es sich beim Monomer (a1) um ein lineares oder verzweigtes Diamin mit 6 bis 8 Kohlenstoffatomen, besonders bevorzugt um 1,6-Hexamethylendiamin und/oder 2-Methyl-1,5-Pentandiamin.

Eine andere bevorzugte Ausführungsform sieht vor, dass es sich beim Monomer (a2) um ein cycloaliphatisches Diamin mit 12 bis 20 Kohlenstoffatomen handelt, welches vorzugsweise ausgewählt ist aus der Gruppe bestehend aus Bis-(4-amino-3-methyl-cyclohexyl)-methan (MACM), Bis-(4-amino-cyclohexyl)-methan (PACM), 2,2-Bis-(4-amino-cyclohexyl)-propan (PACP), 2,2-Bis-(4-amino-3-methyl-cyclohexyl)-propan (MACP), Bis-(4-Amino-3-ethyl-cyclohexyl)-methan (EACM), 2,2-Bis-(4-amino-3-ethyl-cyclohexyl)-propan (EACP), Bis-(4-Amino-3,5-dimethy-cyclohexyl)-methan (TMACM), 2,2-Bis-(4-amino-3,5-dime-thy-cyclohexyl)-propan (TMACP) und Mischungen davon, wobei Bis-(4-amino-3-methyl-cyclohexyl)-methan (MACM), Bis-(4-amino-cyclohexyl)-methan (PACM) und Mischungen davon besonders bevorzugt sind.

Gemäß einer anderen bevorzugten Ausführungsform handelt es sich beim Monomer (a3) um eine aromatische Dicarbonsäure mit 6 bis 36 Kohlenstoffatomen, welche vorzugsweise ausgewählt ist aus der Gruppe bestehend aus Terephthalsäure (TPS), Naphthalindicarbonsäure (NDA), einschliesslich 1,5-Naphthalindicarbonsäure und 2,6-Naphthalindicarbonsäure, Isophthalsäure (IPS), Biphenyl-dicarbonsäuren, bevorzugt Biphenyl-2,2'-dicarbonsäure, 4,4'-Diphenyldicarbonsäure, 3,3'-Diphenyldicarbonsäure, 4,4'-Diphenyl-etherdicarbonsäure, 4,4'-Diphenylmethandicarbonsäure und 4,4'-Diphenylsulfondicarbonsäure, 1,5-Anthracendicarbonsäure, p-Terphenylen-4,4"-dicarbonsäure und 2,5-Pyridindicarbonsäure und Mischungen davon, wobei Terephthalsäure und Isophthalsäure und Mischungen davon besonders bevorzugt sind.

Eine weitere bevorzugte Ausführungsform der vorliegenden Erfindung sieht vor, dass es sich beim Monomer (a4) um eine acyclische, lineare oder verzweigte aliphatische Dicarbonsäure mit 10 bis 14 Kohlenstoffatomen handelt, welche vorzugsweise ausgewählt ist aus der Gruppe bestehend aus Decandisäure, Undecandisäure, Dodecandisäure, Tridecandisäure, Tetradecandisäure und Mischungen davon, wobei besonders bevorzugt Dodecandisäure und insbesondere bevorzugt ausschließlich Dodecandisäure eingesetzt wird.

Gemäß einer weiteren bevorzugten Ausführungsform der vorliegenden Erfindung wird als Monomer (a3) eine Mischung aus Terephthalsäure und Isophthalsäure eingesetzt, vorzugsweise in einem molaren Verhältnis von 2:1 bis 1:2, insbesondere in einem Verhältnis von 1,5:1 bis 1:1,5, wobei insbesondere bevorzugt eine äquimolare Mischung aus Terephthalsäure und Isophthalsäure eingesetzt wird.

Gemäß einer weiteren bevorzugten Ausführungsform der vorliegenden Erfindung liegt der Anteil an Monomer (a1) im Copolyamid im Bereich von 55 bis 80 Mol-%, vorzugsweise im Bereich von 60 bis 77 Mol-% und/oder der Anteil an Monomer (a2) im Copolyamid im Bereich von 20 bis 45 Mol-%, vorzugsweise im Bereich von 23 bis 40 Mol-%, wobei die Anteile der Monomere (a1) und (a2) bezogen auf die Summe der eingesetzten Diamine sind und sich in Summe auf 100 Mol-% ergänzen.

Eine andere bevorzugte Ausführungsform der vorliegenden Erfindung sieht vor, dass der Anteil an Monomer (a3) im Copolyamid im Bereich von 50 bis 80 Mol-%, vorzugsweise im Bereich von 60 bis 75 Mol-% liegt und/oder der Anteil an Monomer (a4) im Copolyamid im Bereich von 20 bis 50 Mol-%, vorzugsweise im Bereich von 25 bis 40 Mol-% liegt, wobei die Anteile der Monomere (a3) und (a4) bezogen auf die Summe der eingesetzten Dicarbonsäuren sind und sich in Summe auf 100 Mol-% ergänzen.

Nach einer anderen bevorzugten Ausführungsform ist
- das Monomer (a1) ausgewählt als 1,6-Hexamethylendiamin;
- das Monomer (a2) ausgewählt aus der Gruppe bestehend aus Bis-(4-amino-3-methyl-cyclohexyl)-methan (MACM), Bis-(4-amino-cyclohexyl)-methan (PACM) und Mischungen davon, vorzugsweise als ausschließlich Bis-(4-amino-3-methyl-cyclohexyl)-methan MACM;
- das Monomer (a3) ausgewählt aus der Gruppe bestehend aus Terephthalsäure, Isophthalsäure und Mischung davon, vorzugsweise eine Mischung in einem Verhältnis von 1.5:1 bis 1:1.5, insbesondere vorzugsweise eine äquimolare Mischung;
- das Monomer (a4) ausgewählt als Dodecandisäure.

Dabei sind bevorzugt die Anteile der Monomere wie folgt ausgewählt:
- (a1) im Bereich von 60 bis 75 Mol-%;
- (a2) im Bereich von 25 bis 40 Mol-%;
- (a3) im Bereich von 60 bis 75 Mol-%;
- (a4) im Bereich von 25 bis 40 Mol-%;
wobei sich die Anteile der Monomere (a1) und (a2) auf die Summe der eingesetzten Diamine beziehen und sich in Summe auf 100 Mol-% ergänzen, und sich die Anteile der Monomere (a3) und (a4) auf die Summe der eingesetzten Dicarbonsäuren beziehen und sich in Summe auf 100 Mol-% ergänzen.

Dabei ist es generell bevorzugt, dass im Rahmen von Komponente (A) keine Bausteine auf Lactam oder Aminosäuren-Basis eingesetzt werden. Komponente (A) ist also im Wesentlichen frei von (d. h. Anteil von weniger als 2 Gewichtsprozent, vorzugsweise weniger als ein Gewichtsprozent, bezogen auf die Gesamtmasse von (A)), vorzugsweise vollständig frei von Lactam und/oder Aminosäuren-Bausteinen.

Ein besonders bevorzugtes Copolyamid (A) ist aus den folgenden Monomeren aufgebaut:
- (a1) ist 1,6-Hexamethylendiamin im Bereich von 60 bis 66 Mol-%;
- (a2) ist MACM im Bereich von 34 bis 40 Mol-%;
- (a3) eine äquimolare Mischung aus Terephthalsäure und Isophthalsäure im Bereich von 59 bis 65 Mol-%;
- (a4) ist Dodecandisäure im Bereich von 35 bis 41 Mol-%;
wobei sich die Anteile der Monomere (a1) und (a2) auf die Summe der eingesetzten Diamine beziehen und sich in Summe auf 100 Mol-% ergänzen, und sich die Anteile der Monomere (a3) und (a4) auf die Summe der eingesetzten Dicarbonsäuren beziehen und sich in Summe auf 100 Mol-% ergänzen.

Weiterhin ist bevorzugt, wenn Komponente (A) eine relative Viskosität bestimmt an Lösungen von 0,5 g Polymer in 100 ml m-Kresol gemäss ISO 307 (2013) bei 20°C von 1,50 bis 1,90, besonders bevorzugt von 1,60 bis 1,80 und ganz besonders bevorzugt von 1,65 und 1,80 aufweist und/oder wenn Komponente (A) eine Glasübergangstemperatur von wenigstens 100°C, bevorzugt von wenigstens 120 oder 130°C und besonders bevorzugt von wenigstens 140°C aufweist, dabei aber bevorzugt von nicht mehr als 220°C oder nicht mehr als 200°C, wobei die Glastemperatur mittels DSC gemäss ISO 11357-2 (2013) mit einer Aufheizrate von 20 K/min bestimmt wird.

Die Copolyamide gemäß Komponente (A) haben keine messbaren oder nur sehr geringe Schmelzwärmen (Schmelzenthalpien) von bevorzugt höchstens 4 J/g, besonders bevorzugt von höchstens 2 J/g und ganz besonders bevorzugt von höchstens 1 J/g (bestimmt gemäss ISO 11357-3 (2013) an Granulat, Differential Scanning Calorimetry (DSC) mit einer Aufheizrate von 20 °C/min).

### Komponente (B)

Die Komponente (B) ist mindestens ein teilkristallines Polyamid ausgewählt aus der Gruppe bestehend aus PA 516, PA 612, PA 6/12, PA 614, PA 616, PA 618, PA 1012, PA 1014, PA 1016, PA 1018 und Mischungen davon.

Gemäß einer bevorzugten Ausführungsform ist Komponenten (B) ausgewählt aus der Gruppe bestehend aus PA 516, PA 612, PA 6/12, PA 616, PA 1012, PA 1014, PA 1016 und Mischungen hiervon, besonders bevorzugt ausgewählt aus der Gruppe bestehend aus PA 516, PA 612, PA 6/12, PA 616, PA 1016 und Mischungen hiervon und insbesondere bevorzugt ist PA 612 oder PA 6/12 .

Weiterhin ist bevorzugt, wenn Komponente (B) eine relative Viskosität bestimmt an Lösungen von 0,5 g Polymer in 100 ml m-Kresol gemäß ISO 307 (2013) bei 20°C von 1,45 bis 2,40, besonders bevorzugt von 1,60 bis 2,30 und ganz besonders bevorzugt von 1,75 und 2,20 aufweist und/oder wenn Komponente (B) einen Schmelzpunkt von 160 bis 240 °C, bevorzugt von 170 bis 230°C und besonders bevorzugt von 185 bis 225 °C aufweist, wobei der Schmelzpunkt mittels DSC gemäß ISO 11357-3 (2013) mit einer Aufheizrate von 20 K/min bestimmt wird.

### Komponente (C)

Gemäß einer bevorzugten Ausführungsform der vorliegenden Erfindung sind die Zusatzstoffe (C) ausgewählt aus der Gruppe bestehend aus anorganischen und organischen Stabilisatoren, insbesondere Antioxidantien, Antiozonantien, Lichtschutzmitteln, insbesondere UV-Stabilisatoren, UV-Absorbern oder UV-Blockern, Gleitmitteln, Farbstoffen, Markierungsmitteln, Pigmenten, Ruß, Graphit, Graphen, Kohlenstoffnanoröhrchen, photochromen Agenzien, Antistatika, Entformungsmitteln, Kondensationskatalysatoren, Kettenreglern, Entschäumern, Antiblockmitteln, kettenverlängernden Additiven, optischen Aufhellern, IR-Absorbern, NIR-Absorbern, halogenhaltigen Flammschutzmitteln, halogenfreien Flammschutzmitteln, natürlichen Schichtsilikaten, synthetischen Schichtsilikaten, metallischen Pigmenten, Metallflittern, metallbeschichteten Partikeln, teilchenförmigen Füllstoffen, faserförmigen Füllstoffen, nanoskaligen Füllstoffen mit einem Partikeldurchmesser (*d₉₅*) von maximal 100 nm, bestimmt mittels Laserbeugung nach ISO 13320 (2009) und Mischungen davon.

Die Schichtsilikate und Füllstoffe können oberflächenbehandelt sein. Dies kann mit einem geeigneten Schlichte- oder Haftvermittlersystem geschehen. Dazu können zum Beispiel Systeme auf Basis von Fettsäuren, Wachsen, Silanen, Titanaten, Polyamiden, Urethanen, Polyhydroxyethern, Epoxiden, Nickel respektive Kombinationen oder Mischungen davon verwendet werden.

Hinsichtlich der faserförmigen bzw. verstärkenden Füllstoffe bestehen grundsätzlich keinerlei Beschränkungen.

Als teilchenförmige Füllstoffe kommen alle dem Fachmann bekannten Füllstoffe in Frage. Hierzu zählen insbesondere partikuläre Füllstoffe ausgewählt aus der Gruppe bestehend aus Mineralen, Talk, Glimmer, Dolomit, Silikaten, Quarz, Titandioxid, Wollastonit, Kaolin, Kieselsäuren, Magnesiumcarbonat, Magnesiumhydroxid, Kreide, gemahlenem Glas, Glasflakes, gemahlenen Carbonfasern, gemahlenem oder gefälltem Calciumcarbonat, Kalk, Feldspat, Bariumsulfat, Zinksulfid, Zinkoxid, permanentmagnetischen oder magnetisierbaren Metallen oder Legierungen, Glaskugeln, Hohlglaskugeln, hohlkugeligen Silikatfüllstoffen und Mischungen hiervon.

Eine andere bevorzugte Ausführungform sieht vor, dass die faserförmigen Füllstoffe ausgewählt sind aus der Gruppe bestehend aus Glasfasern, Carbonfasern, Metallfasern, Aramidfasern, pflanzlichen Fasern, Cellulosefasern, insbesondere Nano-Cellulosefasern, Polymerfasern, Whiskers, Mineralfasern und Mischungen hiervon und insbesondere bevorzugt sind Carbonfasern, Metallfasern, Aramidfasern, pflanzlichen Fasern, Cellulosefasern, insbesondere Nano-Cellulosefasern, Polymerfasern, Whiskers, Mineralfasern und Mischungen hiervon.

Gemäß einer bevorzugten Ausführungsform der vorliegenden Erfindung ist Komponente (C) frei von Glasfasern.

In einer besonders bevorzugten Ausführungsform ist Komponente (C) frei von faserförmigen Füllstoffen.

### Formkörper

Die erfindungsgemäßen Formkörper können aus der erfindungsgemäßen Polyamid-Formmasse über die gängigen Verarbeitungstechniken, wie z.B. Spritzgussverfahren oder Extrusionsverfahren, hergestellt werden.

Eine bevorzugte Ausführungsform vorliegender Erfindung sieht vor, dass der Formkörper ausgewählt ist aus der Gruppe bestehend aus Dekorelementen, insbesondere im Automobilinnenraum oder Modebereich, Sportartikeln, insbesondere Skischuhen, Zwischensohlen für Sportschuhe, Freizeitartikeln, Spielzeugen, insbesondere Konstruktionselementen, Bausteinen, Figuren oder Modellen, Haushaltsartikeln, insbesondere Behältern, Schüsseln, Schalen, Dosen, Bechern, Babyflaschen oder Trinkflaschen, Bauteilen von Küchengeräten, Bauteilen von Brillen, insbesondere Brillenrahmen oder Brillenbügeln, insbesondere für Sicherheitsbrillen, Sportbrillen oder Skibrillen, Möbelbeschlägen, Einlegesohlen, Bau- und Sichtteilen für Geräte im Sanitär-, Hygiene- und Kosmetikbereich, Teilen von Sicherheitsschuhen, insbesondere Kappen, Filtertassen, Schaugläsern, Durchflussmessern, Berstscheiben, Behältern, Gehäusen oder Gehäuseteilen für Elektro- und Elektronikgeräte, insbesondere für Rasierapparate, Epiliergeräte, Messgeräte, Infrarotschlüssel, Mobiltelefone, Abspielgeräte, Personal Digital Assistants (PDA), Smartphones oder Speichermedien (z.B. USB-Sticks), Schutzhüllen für Mobiltelefone, Sichtteilen im Computer und Telekommunikationsbereich, Rohren, Schläuchen, Folien und Bauteilen von E-Zigaretten.

### Verwendungen

Weiterhin betrifft die vorliegende Erfindung die Verwendung der oben definierten erfindungsgemäßen Polyamid-Formmasse zur Herstellung von Dekorelementen, insbesondere im Automobilinnenraum oder Modebereich, Sportartikeln, insbesondere Skischuhen, Zwischensohlen für Sportschuhe, Freizeitartikeln, Spielzeugen, insbesondere Konstruktionselementen, Bausteinen, Figuren oder Modellen, Haushaltsartikeln, insbesondere Behältern, Schüsseln, Schalen, Dosen, Bechern, Babyflaschen oder Trinkflaschen, Bauteilen von Küchengeräten, Bauteilen von Brillen, insbesondere Brillenrahmen oder Brillenbügeln, insbesondere für Sicherheitsbrillen, Sportbrillen oder Skibrillen, Möbelbeschlägen, Einlegesohlen, Bau- und Sichtteilen für Geräte im Sanitär-, Hygiene- und Kosmetikbereich, Teilen von Sicherheitsschuhen, insbesondere Kappen, Filtertassen, Schaugläsern, Durchflussmessern, Berstscheiben, Behältern, Gehäusen oder Gehäuseteilen für Elektro- und Elektronikgeräte, insbesondere für Rasierapparate, Epiliergeräte, Messgeräte, Infrarotschlüssel, Mobiltelefone, Abspielgeräte, Personal Digital Assistants (PDA), Smartphones oder Speichermedien (z.B. USB-Sticks), Schutzhüllen für Mobiltelefone, Sichtteilen im Computer und Telekommunikationsbereich, Rohren, Schläuchen, Folien und Bauteilen von E-Zigaretten.

Anhand der nachfolgenden Beispiele soll der erfindungsgemäße Gegenstand näher erläutert werden, ohne diesen auf die hier gezeigten spezifischen Ausführungsformen einschränken zu wollen.

### 1 Messmethoden

Im Rahmen dieser Anmeldung wurden die folgenden Messmethoden verwendet.

### Relative Viskosität

Die relative Viskosität wurde gemäß ISO 307 (2007) bei 20 °C bestimmt. Dazu wurden 0,5 g Polymergranulat in 100 ml m-Kresol eingewogen, die Berechnung der relativen Viskosität (RV) nach RV = t/t₀ erfolgte in Anlehnung an Abschnitt 11 der Norm.

### Glasübergangstemperatur (Tg) und Schmelzpunkt

Die Bestimmung der Glasübergangstemperatur und des Schmelzpunkts erfolgte nach ISO 11357-2 und -3 (2013) an Granulat.

Die Differential Scanning Calorimetry (DSC) wurde bei jeder der beiden Aufheizungen mit einer Aufheizrate von 20 K/min durchgeführt. Nach der ersten Aufheizung wurde die Probe in Trockeneis abgeschreckt. Glasübergangstemperatur (Tg) und Schmelzpunkt wurden bei der zweiten Aufheizung bestimmt.

Als Schmelzpunkt wurde die Temperatur am Peakmaximum angegeben. Der Mittelpunkt des Glasübergangsbereichs, welcher als Glasübergangstemperatur (Tg) angegeben wurde, wurde nach der Methode "Half Height" ermittelt.

### Zug-E-Modul

Die Bestimmung des Zug-E-Moduls wurde gemäß ISO 527 (2012) bei 23°C mit einer Zuggeschwindigkeit von 1 mm/min an einem ISO-Zugstab (Typ A1, Masse 170 x 20/10 x 4) hergestellt gemäß der Norm: ISO/CD 3167 (2003), durchgeführt.

### Spannungsrissbeständigkeit

Die Bestimmung der Spannungsrissbeständigkeit wurde gemäß DIN 53449-3 (1984) Biegestreifenverfahren an ISO-Zugstäben, Norm: ISO/CD 3167, Typ A1, 170 x 20/10 x 4 mm bei einer Temperatur von 23 °C durchgeführt.

Gemessen wird die Randfaserdehnung bei der nach 60 sekündigem Eintauchen des unter Spannung stehenden ISO-Zugstabes in das Lösungsmittel Risse mit bloßem Auge sichtbar sind. Zur Umrechnung der gemessenen Randfaserdehnung in die angegebene Spannung wird der erhaltene Prozentwert der Randfaserdehnung in Dezimalschreibweise mit dem Zug-E-Modul (trocken, MPa) des vermessenen Materials multipliziert.

### Lichttransmission und Haze

Lichttransmission und Haze wurden bei 23 °C gemäß der ASTM D 1003 (2013) an 60 x 60 mm Platten (Breite x Länge) mit 2 mm Dicke und Filmanguss auf einem "Haze Gard plus" der Firma Byk Gardner mit CIE Lichtart C ermittelt. Der Lichttransmissionswert wurde in % der eingestrahlten Lichtmenge angegeben.

### Herstellung der Prüfkörper

Zur Herstellung der Prüfkörper wurde Granulat mit einem Wassergehalt von weniger als 0,1 Gew.-% verwendet.

Die Prüfkörper wurden auf einer Spritzgussmaschine der Firma Arburg, Modell Allrounder 420 C 1000-250 hergestellt. Dabei wurden vom Einzug zur Düse aufund absteigende Zylindertemperaturen verwendet.

ISO-Zugstäbe

| | |
|---|---|
| Zylindertemperaturen: | 260/265/270/275/280/275 °C |
| Werkzeugtemperatur: | 80 °C |
| Platten 60 x 60 x 2 mm | |
| Zylindertemperaturen: | 270/275/280/285/290/285 °C |
| Werkzeugtemperatur: | 80 °C |

Für die Herstellung der Platten wurde ein poliertes Werkzeug verwendet.

Die Prüfkörper wurden, sofern nichts anderes angegeben ist, in trockenem Zustand verwendet; dazu wurden sie nach dem Spritzguss mindestens 48 h bei Raumtemperatur in trockener Umgebung, d.h. über Silicagel, gelagert.

### 2 Ausgangsmaterialien

Die in den Beispielen und Vergleichsbeispielen verwendeten Materialien werden in den Tabellen 1 und 2 zusammengefasst.

**Tabelle 1: In den Beispielen und Vergleichsbeispielen verwendete Materialien.**

| **Komponenten** | **Beschreibung** | **Hersteller** |
|---|---|---|
| Copolyamid (A) | Amorphes Polyamid aus 1,6-Hexandiamin (63,0 Mol-%), Bis(3-methyl-4-amino-cyclohexyl)methan (37,0 Mol-%), Isophthalsäure (31,0 Mol-%), Terephthalsäure (31,0 Mol-%) und 1,12-Dodecandisäure (38,0 Mol-%) RV 1,71 (gemessen mit 0,5 g in 100 ml m-Kresol bei 20 °C) | EMS-CHEMIE AG, Schweiz |
| | Glasübergangstemperatur 145 °C | |
| Polyamid (B1) | Teilkristallines linear aliphatisches Copolyamid aus Caprolactam (85 Mol-%) und Laurinlactam (15 Mol-%) RV 1,87 (gemessen mit 0,5 g in 100 ml m-Kresol bei 20 °C) | EMS-CHEMIE AG, Schweiz |
| | Schmelzpunkt 200 °C | |
| Polyamid (B2) | Teilkristallines linear aliphatisches Polyamid aus 1,6-Hexandiamin und 1,16-Hexadecandisäure RV 1,95 (gemessen mit 0,5 g in 100 ml m-Kresol bei 20 °C) | EMS-CHEMIE AG, Schweiz |
| | Schmelzpunkt 195 °C | |
| Polyamid (B3) | Teilkristallines linear aliphatisches Polyamid aus 1,6-Hexandiamin und 1,12-Dodecandisäure RV 1,80 (gemessen mit 0,5 g in 100 ml m-Kresol bei 20 °C) | EMS-CHEMIE AG, Schweiz |
| | Schmelzpunkt 220 °C | |
| Polyamid (B4) | Teilkristallines linear aliphatisches Polyamid aus Laurinlactam RV 1,90 (gemessen mit 0,5 g in 100 ml m-Kresol bei 20 °C) | EMS-CHEMIE AG, Schweiz |
| | Schmelzpunkt 178 °C | |

**Tabelle 2: In den Beispielen und Vergleichsbeispielen verwendete Materialien.**

| **Komponenten** | **Beschreibung** | **Handelsname** | **Hersteller** |
|---|---|---|---|
| Antioxidans 1 | N,N'-Hexan-1,6-diylbis[3-(3,5-di-tert-butyl-4-hydroxyphenyl-propi-onamid | Irganox 1098 | BASF SE, Deutschland |
| | CAS-NR.: 23128-74-7 | | |
| Antioxidans 2 | Tris(2,4-ditert-butylphenyl)phosphit | Irgafos 168 | BASF SE, Deutschland |
| | CAS-Nr.: 31570-04-4 | | |

### 3 Beispiele und Vergleichsbeispiele

### 3.1 Allgemeine Herstellungsvorschrift

Die Herstellung der Copolyamide (A) bzw. des Polyamids (B2) erfolgt auf an sich bekannte Weise in bekannten, rührbaren Druckautoklaven mit einem Vorlagegefäß und einem Reaktionsgefäß.

Im Vorlagegefäß wird deionisiertes Wasser vorgelegt und die Monomere und etwaige Zusatzstoffe zugegeben. Danach wird mehrfach mit Stickstoffgas inertisiert. Unter Rühren wird auf 180 bis 230 °C unter dem sich einstellenden Druck aufgeheizt, um eine homogene Lösung zu erhalten. Diese Lösung wird durch ein Sieb in das Reaktionsgefäß gepumpt und dort auf die gewünschte Reaktionstemperatur von 270 bis 310 °C bei einem Druck von maximal 30 bar aufgeheizt. Der Ansatz wird in der Druckphase für 2 bis 4 Stunden auf der Reaktionstemperatur gehalten. In der anschließenden Entspannungsphase wird der Druck innerhalb von 1 bis 2,5 Stunden auf atmosphärischen Druck reduziert, wobei die Temperatur leicht sinken kann. In der folgenden Entgasungsphase wird der Ansatz bei atmosphärischem Druck für 1 bis 2,5 Stunden auf einer Temperatur von 270 bis 300 °C gehalten. Die Polymerschmelze wird in Strangform ausgetragen, im Wasserbad bei 15 bis 80 °C abgekühlt und granuliert. Das Granulat wird bei 80 bis 120 °C unter Stickstoff oder im Vakuum auf einen Wassergehalt von weniger als 0,1 Gew.-% getrocknet.

Geeignete Katalysatoren zur Beschleunigung der Polykondensationsreaktion sind phosphorhaltige Säuren wie beispielsweise H₃PO₂, H₃PO₃, H₃PO₄, deren Salze oder organischen Derivate. Die Katalysatoren werden im Bereich von 0,01 bis 0,5 Gew.-%, bevorzugt 0,03 bis 0,1 Gew.-%, bezogen auf das Polyamid, zugegeben.

Geeignete Entschäumer zur Vermeidung der Schaumbildung während der Entgasung sind wässrige, 10 %-ige Emulsionen, die Silicone oder Siliconderivate enthalten und in Mengen von 0,01 bis 1,0 Gew.-%, bevorzugt 0,01 bis 0,10 Gew.-%, bezogen auf das Polyamid, eingesetzt werden.

Die Einstellung der relativen Viskosität und damit der Molmasse kann in an sich bekannter Weise, z.B. über monofunktionelle Amine oder Carbonsäuren, und/oder difunktionelle Diamine oder Dicarbonsäuren als Kettenregler erfolgen. Die Kettenregler können einzeln oder in Kombination verwendet werden. Die übliche Einsatzmenge der monofunktionellen Kettenregler liegt bei 0,1 bis 2 Mol-%, bezogen auf 100 Mol-% für das Polyamid.

### 3.2 Allgemeine Herstellungs- und Verarbeitungsvorschrift für die Polyamid-Formmassen

Zur Herstellung der erfindungsgemäßen Polyamid-Formmasse werden die Komponenten A), B) und gegebenenfalls C) auf üblichen Compoundier-maschinen, wie z.B. ein- oder zweiwelligen Extrudern oder Schneckenknetern gemischt. Die Komponenten werden dabei einzelnen über gravimetrische oder volumetrische Dosierwaagen in den Einzug oder jeweils in einen Sidefeeder dosiert oder in Form eines Dryblends zugeführt.

Werden Zusatzstoffe (Komponente C)) verwendet, können diese direkt oder in Form eines Masterbatches eingebracht werden. Bei dem Trägermaterial des Masterbatches handelt es sich bevorzugt um ein Polyamid oder ein Polyolefin. Unter den Polyamiden eignet sich dazu besonders das Polyamid der jeweiligen Komponenten A.

Zur Dryblend-Herstellung werden die getrockneten Granulate der Komponenten A), B) und gegebenenfalls C) in einem geschlossenen Behälter vermischt. Diese Mischung wird mittels eines Taumelmischers, Rhönradmischers oder Taumeltrockners 10 bis 40 Minuten lang homogenisiert. Zur Vermeidung der Feuchtigkeitsaufnahme kann dies unter getrocknetem Schutzgas erfolgen.

Die Compoundierung erfolgt bei eingestellten Zylindertemperaturen von 250 bis 300 °C, wobei die Temperatur des ersten Zylinders unter 170 °C eingestellt werden kann. Vor der Düse kann entgast werden. Dies kann mittels Vakuum oder atmosphärisch erfolgen. Die Schmelze wird in Strangform ausgetragen, im Wasserbad bei 10 bis 80 °C abgekühlt und anschließend granuliert. Das Granulat wird bei 80 bis 120 °C unter Stickstoff oder im Vakuum auf einen Wassergehalt von unter 0,1 Gew.-% getrocknet.

Die Verarbeitung der erfindungsgemäßen Polyamid-Formmassen im Spritzguss erfolgt bei Zylindertemperaturen von 260 bis 300 °C, wobei ein vom Einzug zur Düse hin auf- und absteigendes Temperaturprofil verwendet werden kann. Die Werkzeugtemperatur wird auf eine Temperatur von 40 bis 120 °C, bevorzugt 60 bis 100 °C eingestellt.

### 3.3 Herstellung der Polyamid-Formmasse gemäß Beispiel 1

Die getrockneten Granulate der Komponenten (A) und (B) und die Zusatzstoffe (C) wurden zu einem Dryblend vermischt, und zwar in dem in der Tabelle 3 angegebenen Verhältnis. Diese Mischung wurde mittels eines Taumelmischers ca. 20 Minuten lang homogenisiert.

Die Polyamid-Formmasse wurde auf einem Zweiwellenextruder der Firma Collin Typ ZK 25T TL hergestellt. Das Dryblend wurde dabei über eine Dosierwaage in den Einzug dosiert.

Die Temperatur des ersten Gehäuses wurde auf 150 °C eingestellt, diejenige der restlichen Gehäuse auf 270 bis 290 °C. Es wurde eine Drehzahl von 150 U/min und ein Durchsatz von 4 kg/h verwendet. Es wurde nicht entgast. Der Schmelzestrang wurde im Wasserbad abgekühlt, geschnitten und das erhaltene Granulat bei 90 °C für 24 h im Vakuum (30 mbar) auf einen Wassergehalt von unter 0,1 Gew.-% getrocknet.

### 3.4 Beispiele und Vergleichsbeispiele

In der folgenden Tabellen 3 werden die Resultate der Beispiele und Vergleichsbeispiele gemäß vorliegender Erfindung zusammengefasst.

**Tabelle 3: Beispiele und Vergleichsbeispiele.**

| **Komponenten** | **Einheit** | **Beispiele** | | | | | | **Vergleichsbeispiele** | |
|---|---|---|---|---|---|---|---|---|---|
| | | **1** | **2** | **3** | **4** | **5** | **6** | **7** | **8** |
| Copolyamid (A) | Gew.-% | 94.65 | 89.65 | 89.65 | 79.65 | 89.65 | 79.65 | 89.65 | 99.65 |
| Polyamid (B1) | Gew.-% | 5 | 10 | - | - | - | - | - | - |
| Polyamid (B2) | Gew.-% | - | - | 10 | 20 | - | - | - | - |
| Polyamid (B3) | Gew.-% | - | - | - | - | 10 | 20 | - | - |
| Polyamid (B4) | Gew.-% | - | - | - | - | - | - | 10 | - |
| Antioxidans 1 | Gew.-% | 0.25 | 0.25 | 0.25 | 0.25 | 0.25 | 0.25 | 0.25 | 0.25 |
| Antioxidans 2 | Gew.-% | 0.1 | 0.1 | 0.1 | 0.1 | 0.1 | 0.1 | 0.1 | 0.1 |
| **Messwerte** | | | | | | | | | |
| Haze | % | 0.8 | 0.7 | 4.5 | 9.6 | 0.5 | 0.6 | 99.0 | 0.6 |
| Lichttrans-mission | % | 92.7 | 92.5 | 85.8 | 82.4 | 93.2 | 93.2 | 58.5 | 93.0 |
| Zug-E-Modul | MPa | 2350 | 2370 | 2130 | 2110 | 2180 | 2150 | 2210 | 2300 |
| Spannungsrissbeständigkeit | | | | | | | | | |
| Diethylenglykol | MPa | 29 | 29 | 37 | 36 | 27 | 27 | 22 | 12 |
| Toluol | MPa | 29 | 36 | 42 | 31 | 33 | 37 | 27 | 17 |
| n-Hexan | MPa | 24 | 36 | 69 | 73 | 65 | 48 | 59 | 23 |

### 4 Diskussion der Ergebnisse

Die erfindungsgemäßen Beispiele 1 bis 6 betreffen Polyamid-Formmassen in denen das anspruchsgemäße amorphe Copolyamid (A) mit den anspruchsgemäßen teilkristallinen Polyamiden PA 6/12 (B1), PA 616 (B2) oder PA 612 (B3) verwendet wird.

Das Vergleichsbeispiel 7 betrifft einen Blend aus dem anspruchsgemäßen amorphen Copolyamid (A) mit dem nicht anspruchsgemäßen teilkristallinen Polyamid PA 12 und das Vergleichsbeispiel 8 betrifft eine Polyamid-Formmasse aus dem Copolyamid (A).

Die erfindungsgemäßen Beispiele zeigen eine sehr gute Spannungsrissbeständigkeit in verschiedenen Lösemitteln und sehr gute optische Eigenschaften, ausgedrückt durch eine hohe Lichttransmission und einen tiefen Haze.

Die Mischung aus dem amorphen Copolyamid A und PA 12 gemäß VB7, führt zwar in einer verglichen mit dem reinen Copolyamid (VB8) erhöhten Spannungsrissbeständigkeit, aber die optischen Eigenschaften werden deutlich verschlechtert. Die Polyamid-Formmasse gemäß VB8 hingegen weist zwar gute optische Eigenschaften auf, zeigt aber eine signifikant verschlechterte Spannungsrissbeständigkeit.

Eine sehr gute Spannungsrissbeständigkeit in Kombination mit sehr guten optischen Eigenschaften wird nur durch die spezifische Merkmalskombination gemäß Anspruch 1 erreicht.

## Patentansprüche

1. Polyamid-Formmasse enthaltend die folgenden Komponenten (A) bis (C) oder bestehend aus diesen Komponenten:
(A) 69 bis 94,7 Gew.-% mindestens eines amorphen Copolyamids gebildet aus den Monomeren (a1) bis (a4):
(a1) 50 bis 80 Mol-% mindestens eines acyclischen, aliphatischen Diamins mit 6 bis 10 Kohlenstoffatomen;
(a2) 20 bis 50 Mol-% mindestens eines cycloaliphatischen Diamins mit 6 bis 36 Kohlenstoffatomen;
(a3) 40 bis 80 Mol-% mindestens einer aromatischer Dicarbonsäure;
(a4) 20 bis 60 Mol-% mindestens einer acyclischen, aliphatischen Dicarbonsäure mit 8 bis 16 Kohlenstoffatomen;
wobei die Anteile der Monomere (a1) und (a2) bezogen auf die Summe der eingesetzten Diamine sind und sich in Summe auf 100 Mol-% ergänzen; und
wobei die Anteile der Monomere (a3) und (a4) bezogen auf die Summe der eingesetzten Dicarbonsäuren sind und sich in Summe auf 100 Mol-% ergänzen;
(B) 5 bis 25 Gew.-% mindestens eines teilkristallinen Polyamids ausgewählt aus der Gruppe bestehend aus PA 612, PA 6/12, PA 516, PA 614, PA 616, PA 618, PA 1012, PA 1014, PA 1016, PA 1018, und Mischungen hiervon; und
(C) 0,3 bis 6 Gew.-% mindestens eines Zusatzstoffes;
wobei sich die Mengenanteile der Komponenten (A) bis (C) in Summe auf 100 Gew.-% ergänzen.

2. Polyamid-Formmasse gemäß Anspruch 1, **dadurch gekennzeichnet, dass**
der Anteil von Komponente (A) in der Polyamid-Formmasse im Bereich von 76 bis 91,5 Gew.% bezogen auf das Gesamtgewicht der Polyamid-Formmasse liegt, und/oder
der Anteil von Komponente (B) in der Polyamid-Formmasse im Bereich von 8 bis 20 Gew.% und ganz besonders bevorzugt 10 bis 15 Gew.-%, bezogen auf das Gesamtgewicht der Polyamid-Formmasse liegt, und/oder
der Anteil von Komponente (C) in der Formmasse im Bereich von 0,5 bis 4 Gew.% bezogen auf das Gesamtgewicht der Polyamid-Formmasse liegt.

3. Polyamid-Formmasse gemäß Anspruch 1 oder 2, **dadurch gekennzeichnet, dass**
es sich beim Monomer (a1) um ein lineares oder verzweigtes Diamin mit 6 bis 8 Kohlenstoffatomen, bevorzugt um 1,6-Hexamethylendiamin und/oder 2-Methyl-1,5-Pentandiamin handelt; und/oder
es sich beim Monomer (a2) um ein cycloaliphatisches Diamin mit 12 bis 20 Kohlenstoffatomen handelt, welches vorzugsweise ausgewählt ist aus der Gruppe bestehend aus Bis-(4-amino-3-methyl-cyclohexyl)-methan (MACM), Bis-(4-amino-cyclohexyl)-methan (PACM), 2,2-Bis-(4-amino-cyclohexyl)-propan (PACP), 2,2-Bis-(4-amino-3-methyl-cyclohexyl)-propan (MACP), Bis-(4-Amino-3-ethyl-cyclohexyl)-methan (EACM), 2,2-Bis-(4-amino-3-ethyl-cyclohexyl)-propan (EACP), Bis-(4-Amino-3,5-dimethy-cyclohexyl)-methan (TMACM), 2,2-Bis-(4-amino-3,5-dimethy-cyclohexyl)-propan (TMACP) und Mischungen davon, wobei Bis-(4-amino-3-methyl-cyclohexyl)-methan (MACM), Bis-(4-amino-cyclohexyl)-methan (PACM) und Mischungen davon besonders bevorzugt sind; und/oder
es sich beim Monomer (a3) um eine aromatische Dicarbonsäure mit 6 bis 36 Kohlenstoffatomen handelt, welche vorzugsweise ausgewählt ist aus der Gruppe bestehend aus Terephthalsäure (TPS), Naphthalindicarbonsäure (NDA), einschliesslich 1,5-Naphthalindicarbonsäure und 2,6-Naphthalindicarbonsäure, Isophthalsäure (IPS), Biphenyl-dicarbonsäuren, bevorzugt Biphenyl-2,2'-dicarbonsäure, 4,4'-Diphenyldicarbonsäure, 3,3'-Diphenyldicarbonsäure, 4,4'-Diphenyl-etherdicarbonsäure, 4,4'-Diphenylmethandicarbonsäure und 4,4'-Diphenylsulfondicarbonsäure, 1,5-Anthracendicarbonsäure, p-Terphenylen-4,4"-dicarbonsäure und 2,5-Pyridindicarbonsäure und Mischungen davon, wobei Terephthalsäure und Isophthalsäure und Mischungen davon besonders bevorzugt sind; und/oder
es sich beim Monomer (a4) um eine acyclische, lineare oder verzweigte aliphatische Dicarbonsäure mit 10 bis 14 Kohlenstoffatomen handelt, welche vorzugsweise ausgewählt ist aus der Gruppe bestehend aus Decandisäure, Undecandisäure, Dodecandisäure, Tridecandisäure, Tetradecandisäure und Mischungen davon, wobei besonders bevorzugt Dodecandisäure und insbesondere bevorzugt ausschließlich Dodecandisäure eingesetzt wird.

4. Polyamid-Formmasse gemäß einem der vorhergehenden Ansprüche, **dadurch gekennzeichnet, dass**
als Monomer (a3) eine Mischung aus Terephthalsäure und Isophthalsäure eingesetzt wird, vorzugsweise in einem molaren Verhältnis von 2:1 bis 1:2, insbesondere in einem Verhältnis von 1,5:1 bis 1:1,5, wobei insbesondere bevorzugt eine äquimolare Mischung aus Terephthalsäure und Isophthalsäure eingesetzt wird.

5. Polyamid-Formmasse gemäß einem der vorhergehenden Ansprüche, **dadurch gekennzeichnet, dass**
der Anteil an Monomer (a1) im Copolyamid im Bereich von 55 bis 80 Mol-%, vorzugsweise im Bereich von 60 bis 77 Mol-% liegt; und/oder der Anteil an Monomer (a2) im Copolyamid im Bereich von 20 bis 45 Mol-%, vorzugsweise im Bereich von 23 bis 40 Mol-% liegt;
wobei die Anteile der Monomere (a1) und (a2) bezogen auf die Summe der eingesetzten Diamine sind und sich in Summe auf 100 Mol-% ergänzen; und/oder
der Anteil an Monomer (a3) im Copolyamid im Bereich von 50 bis 80 Mol-%, vorzugsweise im Bereich von 60 bis 75 Mol-% liegt; und/oder der Anteil an Monomer (a4) im Copolyamid im Bereich von 20 bis 50 Mol-%, vorzugsweise im Bereich von 25 bis 40 Mol-% liegt;
wobei die Anteile der Monomere (a3) und (a4) bezogen auf die Summe der eingesetzten Dicarbonsäuren sind und sich in Summe auf 100 Mol-% ergänzen.

6. Polyamid-Formmasse gemäß einem der vorhergehenden Ansprüche, **dadurch gekennzeichnet, dass**
Monomer (a1) ausgewählt ist als 1,6-Hexamethylendiamin;
Monomer (a2) ausgewählt ist aus der Gruppe bestehend aus Bis-(4-amino-3-methyl-cyclohexyl)-methan (MACM), Bis-(4-amino-cyclohexyl)-methan (PACM) und Mischungen davon, vorzugsweise als ausschließlich Bis-(4-amino-3-methyl-cyclohexyl)-methan MACM;
Monomer (a3) ausgewählt ist aus der Gruppe bestehend aus Terephthalsäure, Isophthalsäure und Mischungen davon, vorzugsweise eine Mischung in einem Verhältnis von 1.5:1 bis 1:1.5, insbesondere vorzugsweise eine äquimolare Mischung;
Monomer (a4) ausgewählt ist als Dodecandisäure;
wobei bevorzugtermaßen die Anteile der Monomere wie folgt ausgewählt sind:
(a1) im Bereich von 60 bis 75 Mol-%;
(a2) im Bereich von 25 bis 40 Mol-%;
(a3) im Bereich von 60 bis 75 Mol-%;
(a4) im Bereich von 25 bis 40 Mol-%;
wobei die Anteile der Monomere (a1) und (a2) bezogen auf die Summe der eingesetzten Diamine sind und sich in Summe auf 100 Mol-% ergänzen; und
wobei die Anteile der Monomere (a3) und (a4) bezogen auf die Summe der eingesetzten Dicarbonsäuren sind und sich in Summe auf 100 Mol-% ergänzen.

7. Polyamid-Formmasse gemäß einem der vorhergehenden Ansprüche, **dadurch gekennzeichnet, dass**
die Zusatzstoffe (C) ausgewählt sind aus der Gruppe bestehend aus anorganischen und organischen Stabilisatoren, insbesondere Antioxidantien, Antiozonantien, Lichtschutzmitteln, insbesondere UV-Stabilisatoren, UV-Absorbern oder UV-Blockern, Gleitmitteln, Farbstoffen, Markierungsmitteln, Pigmenten, Ruß, Graphit, Graphen, Kohlenstoffnanoröhrchen, photochromen Agenzien, Antistatika, Entformungsmitteln, Kondensationskatalysatoren, Kettenreglern, Entschäumern, Antiblockmitteln, kettenverlängernden Additiven, optischen Aufhellern, IR-Absorbern, NIR-Absorbern, halogenhaltigen Flammschutzmitteln, halogenfreien Flammschutzmitteln, natürlichen Schichtsilikaten, synthetischen Schichtsilikaten, metallischen Pigmenten, Metallflittern, metallbeschichteten Partikeln, teilchenförmigen Füllstoffen, faserförmigen Füllstoffen, nanoskaligen Füllstoffen mit einem Partikeldurchmesser (*d₉₅*) von maximal 100 nm, bestimmt mittels Laserbeugung nach ISO 13320 (2009) und Mischungen davon.

8. Polyamid-Formmasse gemäß Anspruch 7, **dadurch gekennzeichnet, dass**
die faserförmigen Füllstoffe ausgewählt sind aus der Gruppe bestehend aus Glasfasern, Carbonfasern, Metallfasern, Aramidfasern, pflanzlichen Fasern, Cellulosefasern, insbesondere Nano-Cellulosefasern, Polymerfasern, Whiskers, Mineralfasern und Mischungen hiervon, bevorzugt Carbonfasern, Metallfasern, Aramidfasern, pflanzlichen Fasern, Cellulosefasern, insbesondere Nano-Cellulosefasern, Polymerfasern, Whiskers, Mineralfasern und Mischungen hiervon.

9. Polyamid-Formmasse gemäß einem der vorhergehenden Ansprüche, **dadurch gekennzeichnet, dass**
das teilkristalline Polyamid (B) ausgewählt ist aus der Gruppe bestehend aus PA 516, PA 612, PA 6/12, PA 616, PA 1012, PA 1014, PA 1016 und Mischungen hiervon und bevorzugt ausgewählt ist aus der Gruppe bestehend aus PA 516, PA 612, PA 6/12, PA 616, PA 1016 und Mischungen hiervon und besonders bevorzugt PA 612 oder PA 6/12 ist

10. Polyamid-Formmasse gemäß einem der vorhergehenden Ansprüche, **dadurch gekennzeichnet, dass**
die Polyamid-Formmasse genau ein Copolyamid (A) und genau ein teilkristallines Polyamid (B) enthält.

11. Polyamid-Formmasse gemäß einem der vorhergehenden Ansprüche, **dadurch gekennzeichnet, dass**
der an einem aus der Polyamid-Formmasse hergestellten Formkörper (2 mm dicke Platten mit Breite und Länge: 60 x 60 mm) nach ASTM D1003 gemessene Haze der Polyamid-Formmasse, < 15 %, bevorzugt < 10 %, besonders bevorzugt < 8 % und ganz besonders bevorzugt < 1,0 ist; und/oder
die an einem aus der Polyamid-Formmasse hergestellten Formkörper (2 mm dicke Platten mit Breite und Länge: 60 x 60 mm) nach ASTM D1003 gemessene Transparenz mindestens 80 %, bevorzugt mindestens 85 % und besonders bevorzugt mindestens 90 % beträgt.

12. Polyamid-Formmasse gemäß einem der vorhergehenden Ansprüche, **dadurch gekennzeichnet, dass** ein Prüfkörper aus der Polyamid-Formmasse
einen Zug-E-Modul bestimmt nach ISO 527 von mindestens 2000 MPa, bevorzugt mindestens 2100 MPa und besonders bevorzugt mindestens 2150 MPa aufweist; und/oder
eine Spannungsrissbeständigkeit in Diethylenglykol bestimmt nach DIN 53449-3 (1984) Biegestreifenverfahren von mindestens 12 MPa, bevorzugt mindestens 22 MPa und besonders bevorzugt mindestens 27 MPa aufweist; und/oder
eine Spannungsrissbeständigkeit in Toluol bestimmt nach DIN 53449-3 (1984) Biegestreifenverfahren von mindestens 17 MPa, bevorzugt mindestens 27 MPa und besonders bevorzugt mindestens 30 MPa aufweist; und/oder
eine Spannungsrissbeständigkeit in n-Hexan bestimmt nach DIN 53449-3 (1984) Biegestreifenverfahren von mindestens 23 MPa, bevorzugt mindestens 30 MPa und besonders bevorzugt mindestens 35 MPa aufweist.

13. Formkörper herstellbar aus einer Polyamid-Formmasse nach einem der Ansprüche 1 bis 12.

14. Formkörper nach Anspruch 12 **dadurch gekennzeichnet, dass**
der Formkörper ausgewählt ist aus der Gruppe bestehend aus Dekorelementen, insbesondere im Automobilinnenraum oder Modebereich, Sportartikeln, insbesondere Skischuhen, Zwischensohlen für Sportschuhe, Freizeitartikeln, Spielzeugen, insbesondere Konstruktionselementen, Bausteinen, Figuren oder Modellen, Haushaltsartikeln, insbesondere Behältern, Schüsseln, Schalen, Dosen, Bechern, Babyflaschen oder Trinkflaschen, Bauteilen von Küchengeräten, Bauteilen von Brillen, insbesondere Brillenrahmen oder Brillenbügeln, insbesondere für Sicherheitsbrillen, Sportbrillen oder Skibrillen, Möbelbeschlägen, Einlegesohlen, Bau- und Sichtteilen für Geräte im Sanitär-, Hygiene- und Kosmetikbereich, Teilen von Sicherheitsschuhen, insbesondere Kappen, Filtertassen, Schaugläsern, Durchflussmessern, Berstscheiben, Behältern, Gehäusen oder Gehäuseteilen für Elektro- und Elektronikgeräte, insbesondere für Rasierapparate, Epiliergeräte, Messgeräte, Infrarotschlüssel, Mobiltelefone, Abspielgeräte, Personal Digital Assistants (PDA), Smartphones oder Speichermedien, insbesondere USB-Sticks, Schutzhüllen für Mobiltelefone, Sichtteilen im Computer und Telekommunikationsbereich, Rohren, Schläuchen, Folien und Bauteilen von E-Zigaretten.

15. Verwendung der Polyamid-Formmassen nach einem der Ansprüche 1 bis 12 zur Herstellung eines Formkörpers ausgewählt aus der Gruppe bestehend aus Dekorelementen, insbesondere im Automobilinnenraum oder Modebereich, Sportartikeln, insbesondere Skischuhen, Zwi- schensohlen für Sportschuhe, Freizeitartikeln, Spielzeugen, insbesondere Konstruktionselementen, Bausteinen, Figuren oder Modellen, Haushaltsartikeln, insbesondere Behälter, Schüsseln, Schalen, Dosen, Bechern, Babyflaschen oder Trinkflaschen, Bauteilen von Küchengeräten, Bauteilen von Brillen, insbesondere Brillenrahmen oder Brillenbügeln, insbesondere für Sicherheitsbrillen, Sportbrillen oder Skibrillen, Möbelbeschlägen, Einlegesohlen, Bau- und Sichtteilen für Geräte im Sanitär-, Hygiene- und Kosmetikbereich, Teilen von Sicherheitsschuhen, insbesondere Kappen, Filtertassen, Schaugläsern, Durchflussmessern, Berstscheiben, Behältern, Gehäusen oder Gehäuseteilen für Elektro- und Elektronikgeräte, insbesondere für Rasierapparate, Epiliergeräte, Messgeräte, Infrarotschlüssel, Mobiltelefone, Abspielgeräte, Personal Digital Assistants (PDA), Smartphones oder Speichermedien, insbesondere USB-Sticks, Schutzhüllen für Mobiltelefone, Sichtteilen im Computer und Telekommunikationsbereich, Rohren, Schläuchen, Folien und Bauteilen von E-Zigaretten.

## Claims

1. A polyamide molding compound comprising the following components (A) to (C) or consisting of these components:
(A) 69 to 94.7 wt% of at least one amorphous copolyamide formed from the monomers (a1) to (a4):
(a1) 50 to 80 mol% of at least one acrylic aliphatic diamine having 6 to 10 carbon atoms;
(a2) 20 to 50 mol% of at least one cycloaliphatic diamine having 6 to 36 carbon atoms;
(a3) 40 to 80 mol% of at least one aromatic dicarboxylic acid;
(a4) 20 to 60 mol% of at least one acrylic, aliphatic dicarboxylic acid having 8 to 16 carbon atoms,
where the proportions of the monomers (a1) and (a2) are related to the sum of the diamines used and add up to 100 mol% in sum; and
where the proportions of the monomers (a3) and (a4) are related to the sum of the dicarboxylic acids used and add up to 100 mol% in sum;
(B) 5 to 25 wt% of at least one partially crystalline polyamide selected from the group consisting of PA 612, PA 6/12, PA 516, PA 614, PA 616, PA 618, PA 1012, PA 1014, PA 1016, PA 1018, and mixtures hereof; and
(C) 0.3 to 6 wt% of at least one additive;
wherein the quantity proportions of the components (A) to (C) add up to 100 wt% in sum.

2. A polyamide molding compound in accordance with claim 1, **characterized in that**
the proportion of component (A) in the polyamide molding compound is the range from 76 to 91.5 wt%, with respect to the total weight of the polyamide molding compound; and/ or
the proportion of component (B) in the polyamide molding compound is in the range from 8 to 20 wt%, and very particularly preferably 10 to 15 wt%, with respect to the total weight of the polyamide molding compound; and/ or
the proportion of component (C) in the molding compound is in the range from 0.5 to 4 wt%, with respect to the total weight of the polyamide molding compound.

3. A polyamide molding compound in accordance with claim 1 or claim 2, **characterized in that**
the monomer (a1) is a linear or branched diamine having 6 to 8 carbon atoms, preferably 1,6-hexamethylenediamine and/or 2-methyl--1.5 pentanediamine; and/or
the monomer (a2) is a cycloaliphatic diamine having 12 to 20 carbon atoms that is preferably selected from the group consisting of bis-(4-amino-3-methyl-cyclohexyl)methane (MACM), bis-(4-amino-cyclohexyl)methane (PACM), 2,2-bis-(4-amino-cyclohexyl)propane (PACP), 2,2-bis-(4-amino-3-methyl-cyclohexyl)propane (MACP), bis-(4-amino-3-ethyl-cyclohexyl)methane (EACM), 2,2-bis-(4-amino-3-ethylcyclohexyl)propane (EACP), bis-(4-amino-3,5-dimethyl-cyclohexyl)methane (TMACM), 2,2-bis-(4-amino-3,5-dimethyl-cyclohexyl)propane (TMACP) and mixtures thereof, with bis-(4-amino-3-methyl-cyclohexyl)methane (MACM), bis-(4-amino-cyclohexyl)methane (PACM), and mixtures thereof being particularly preferred; and/or
the monomer (a3) is an aromatic dicarboxylic acid having 6 to 36 carbon atoms that is preferably selected from the group consisting of terepththalic acid (TPA) naphthalene dicarboxylic acid (NDA), including 1,5-naphthalene dicarboxylic acid and 2,6-naphthalene dicarboxylic acid, isophthalic acid (IPA), biphenyl-dicarboxylic acid, preferably biphenyl-2-2'-dicarboxylic acid, 4,4' diphenyl-dicarboxylic acid, 3,3'-diphenyl-dicarboxylic acid, 4,4'-diphenyl-ether-dicarboxylic acid, 4,4'-diphenyl-methane-dicarboxylic acid, and 4,4'-diphenyl-sulfone-dicarboxylic acid, 1,5-anthracene dicarboxylic acid, p-terphenylene-4,4'-dicarboxylic acid, and 2,5-pyridine dicarboxylic acid, and mixtures thereof, with terephthalic acid and isophthalic acid and mixtures thereof being particularly preferred; and/or
the monomer (a4) is an acyclic, linear, or branched aliphatic dicarboxylic acid having 10 to 14 carbon atoms that is preferably selected from the group consisting of decanedioic acid, undecanedioic acid, tridecanedioic acid, tetradecanedioic acid, and mixtures thereof, with dodecanedioic acid particularly preferably being used and only dodecanedioic acid in particular preferably being used.

4. A polyamide molding compound in accordance with one of the preceding claims, **characterized in that**
a mixture of terepththalic acid and isophthalic acid is used as monomer (a3), preferably in a molar ratio of 2:1 to 1:2, in particular in a ratio from 1.5:1 to 1:1.5, with an equimolar mixture of terepththalic acid and isophthalic acid in particular preferably being used.

5. A polyamide molding compound in accordance with one of the preceding claims, **characterized in that**
the proportion of monomer (a1) in the copolyamide is in the range from 55 to 80 mol%, preferably in the range from 60 to 77 mol%; and/or the proportion of monomer (a2) in the copolyamide is in the range from 20 to 45 mol%, preferably in the range from 23 to 40 mol%;
where the proportions of the monomers (a1) and (a2) are related to the sum of the diamines used and add up to 100 mol% in sum; and/or
the proportion of monomer (a3) in the copolyamide is in the range from 50 to 80 mol%, preferably in the range from 60 to 75 mol%; and/or the proportion of monomer (a4) in the copolyamide is in the range from 20 to 50 mol%, preferably in the range from 25 to 40 mol%;
where the proportions of the monomers (a3) and (a4) are related to the sum of the dicarboxylic acids used and add up to 100 mol% in sum.

6. A polyamide molding compound in accordance with one of the preceding claims, **characterized in that**
monomer (a1) is selected as 1,6-hexamethylenediamine;
monomer (a2) is selected from the group consisting of bis-(4-amino-3-methyl-cyclohexyl)methane (MACM), bis-(4-amino-cyclohexyl)methane (PACM), and mixtures thereof, preferably as exclusively bis-(4-amino-3-methyl-cyclohexyl)methane MACM;
monomer (a3) is selected from the group consisting of terepththalic acid, isophthalic acid, and mixtures thereof, preferably a mixture in a ratio of 1.5:1 to 1:1.5, in particular preferably an equipolar mixture;
monomer (a4) is selected as a docanedioic acid;
with the proportions of the monomers preferably being selected as follows:
(a1) in the range from 60 to 75 mol%;
(a2) in the range from 25 to 40 mol%;
(a3) in the range from 60 to 75 mol%; and
(a4) in the range from 25 to 40 mol%,
where the proportions of the monomers (a1) and (a2) are related to the sum of the diamines used and add up to 100 mol% in sum; and
where the proportions of the monomers (a3) and (a4) are related to the sum of the dicarboxylic acids used and add up to 100 mol% in sum.

7. A polyamide molding compound in accordance with one of the preceding claims, **characterized in that**
the additives (C) are selected from the group consisting of inorganic and organic stabilizers, in particular antioxidants, antiozonants, light protection agents, in particular UV stabilizers, UV absorbers, or UV blockers, lubricants, colorants, marking agents, pigments, carbon black, graphite, graphene, carbon nanotubes, photochromic agents, antistatic agents, demolding means, condensation catalysts, chain regulators, anti-foaming agents, anti-blocking agents, chain-extending additives, optical brighteners, IR absorbers, NIR absorbers, halogenated flame retardants, halogen-free flame retardants, natural sheet silicates, synthetic sheet silicates, metallic pigments, metal glitter, metal-coated particles, particulate filers, fibrous fillers, nanoscale fillers having a particle diameter (*d₉₅*) of a maximum of 100 nm, determined by means of laser diffraction in accordance with ISO 13320 (2009), and mixtures thereof.

8. A polyamide molding compound in accordance with claim 7, **characterized in that**
the fibrous fillers are selected from the group consisting of glass fibers, carbon fibers, metal fibers, aramide fibers, vegetable fibers, cellulose fibers, in particular nano-cellulose fibers, polymer fibers, whiskers, mineral fibers, and mixtures hereof; preferably carbon fibers, metal fibers, aramide fibers, vegetable fibers, cellulose fibers, in particular nano-cellulose fibers, polymer fibers, whiskers, mineral fibers, and mixtures hereof.

9. A polyamide molding compound in accordance with one of the preceding claims, **characterized in that**
the partially crystalline component (B) is selected from the group consisting of PA 516, PA 612, PA 6/12, PA 616, PA 1012, PA 1014, PA 1016, and mixtures hereof, particularly preferably consisting of PA 516, PA 612, PA 6/12, PA 616, PA 1016, and mixtures hereof, and is particularly preferably PA 612 or PA 6/12.

10. A polyamide molding compound in accordance with one of the preceding claims, **characterized in that**
the polyamide molding compound contains exactly one copolyamide (A) and exactly one partially crystalline polyamide (B).

11. A polyamide molding compound in accordance with one of the preceding claims, **characterized in that**
the haze of the polyamide molding compound measured in accordance with ASTM D1003 at a molded body (2 mm thick plates with a width and length: 60 x 60 mm) produced from the polyamide molding compound is < 15%, preferably < 10%, particularly preferably < 8%, and very particularly preferably < 1.0; and/or
the transparency measured in accordance with ASTM D1003 at a molded body (2 mm thick plates with a width and length: 60 x 60 mm) produced from the polyamide molding compound is at least 80%, preferably at least 85% and particularly preferably at least 90%.

12. A polyamide molding compound in accordance with one of the preceding claims, **characterized in that** a test specimen from the polyamide molding compound has
a modulus of elasticity determined in accordance with ISO 527 of at least 2000 MPa, preferably at least 2100 MPa, and particularly preferably at least 2150 Mpa; and/or
a stress crack resistance in diethylene glycol determined in accordance with DIN 53449- 3 (1984) bent strip test of at least 12 MPa preferably at least 22 MPa, and particularly preferably at least 27 MPa; and/or
a stress crack resistance in toluol determined in accordance with DIN 53449- 3 (1984) bent strip test of at least 17 MPa preferably at least 27 MPa, and particularly preferably at least 30 MPa; and/or
a stress crack resistance in n-hexane determined in accordance with DIN 53449- 3 (1984) bent strip test of at least 23 MPa preferably at least 30 MPa, and particularly preferably at least 35 MPa.

13. A molded body that can be manufactured from a polyamide molding compound in accordance with one of the claims 1 to 12.

14. A molded body in accordance with claim 12, **characterized in that**
the molded body is selected from the group consisting of trim elements, in particular in the passenger space of automobiles or in the fashion sector, sports articles, in particular ski shoes, midsoles for sports shoes, leisure articles, toys, in particular construction elements, modules, figures or models, domestic articles, in particular containers, bowls, dishes, cans, beakers, baby bottles or drinking bottles, components of kitchen appliances, components of eyeglasses, in particular glasses frames or glasses arms, in particular for safety goggles, sports glasses, or ski goggles, furniture fittings, inserted soles, construction parts and visible parts for units in the sanitary area, hygiene area, and cosmetic area, parts of safety shoes, in particular caps, drip filter cups, inspection glasses, flowmeters, blow-out disks, containers, housing, and housing parts for electric devices and electronic devices, in particular for razors, epilators, measurement units, infrared keys, cellular phones, players, personal digital assistants (PDAs), smartphones or storage media (in particular USB sticks), protective covers for cellular phones, visible parts in the area of computers and telecommunications, tubes, hoses, films and components of E-cigarettes.

15. Use of the polyamide molding compounds in accordance with one of the claims 1 to 12 for manufacturing a molded body selected from the group consisting of trim elements, in particular in the passenger space of automobiles or in the fashion sector, sports articles, in particular ski shoes, midsoles for sports shoes, leisure articles, toys, in particular construction elements, modules, figures or models, domestic articles, in particular containers, bowls, dishes, cans, beakers, baby bottles or drinking bottles, components of kitchen appliances, components of eyeglasses, in particular glasses frames or glasses arms, in particular for safety goggles, sports glasses, or ski goggles, furniture fittings, inserted soles, construction parts and visible parts for units in the sanitary area, hygiene area, and cosmetic area, parts of safety shoes, in particular caps, drip filter cups, inspection glasses, flowmeters, blow-out disks, containers, housing, and housing parts for electric devices and electronic devices, in particular for razors, epilators, measurement units, infrared keys, cellular phones, players, personal digital assistants (PDAs), smartphones or storage media (in particular USB sticks), protective covers for cellular phones, visible parts in the area of computers and telecommunications, tubes, hoses, films and components of E-cigarettes.

## Revendications

1. Matière à mouler à base de polyamide contenant les composants suivants (A) à (C) ou constituée de ces composants :
(A) 69 à 94,7 % en poids d'au moins un copolyamide amorphe formé des monomères (a1) à (a4) :
(a1) 50 à 80 % en moles d'au moins une diamine aliphatique acyclique avec 6 à 10 atomes de carbone ;
(a2) 20 à 50 % en moles d'au moins une diamine cycloaliphatique avec 6 à 36 atomes de carbone ;
(a3) 40 à 80 % en moles d'au moins un acide dicarboxylique aromatique ;
(a4) 20 à 60 % en moles d'au moins un acide dicarboxylique aliphatique acyclique avec 8 à 16 atomes de carbone ;
dans laquelle les pourcentages des monomères (a1) et (a2) sont rapportés à la somme des diamines utilisées et se complètent au total à 100% en moles ; et
dans laquelle les pourcentages des monomères (a3) et (a4) sont rapportés à la somme des acides dicarboxyliques utilisés et se complètent au total à 100 % en moles ;
(B) 5 à 25 % en poids d'au moins un polyamide semi-cristallin choisi dans le groupe constitué par le PA 612, PA 6/12, PA 516, PA 614, PA 616, PA 618, PA 1012, PA 1014, PA 1016, PA 1018, et leurs mélanges ; et
(C) 0,3 à 6 % en poids d'au moins un additif ;
dans laquelle les fractions des composants (A) à (C) se complètent au total à 100 % en poids.

2. Matière à mouler en polyamide selon la revendication 1, **caractérisée en ce que**
le pourcentage de composant (A) dans la matière à mouler en polyamide se situe dans la plage de 76 à 91,5 % en poids par rapport au poids total de la matière à mouler en polyamide, et/ou
le pourcentage de composant (B) dans la matière à mouler en polyamide se situe dans la plage de 8 à 20 % en poids et idéalement 10 à 15 % en poids, par rapport au poids total de la matière à mouler en polyamide, et/ou
le pourcentage de composant (C) dans la matière à mouler se situe dans la plage de 0,5 à 4 % en poids par rapport au poids total de la matière à mouler en polyamide.

3. Matière à mouler à base de polyamide selon la revendication 1 ou la revendication 2, **caractérisée en ce que**
le monomère (a1) est une diamine linéaire ou ramifiée avec 6 à 8 atomes de carbone, de préférence la 1,6-hexaméthylènediamine et/ou la 2-méthyl-1,5-pentanediamine ; et/ou
le monomère (a2) est une diamine cycloaliphatique avec 12 à 20 atomes de carbone, laquelle est de préférence choisie dans le groupe constitué par le bis-(4-amino-3-méthyl-cyclohexyl)-méthane (MACM), bis-(4-amino-cyclohexyl)-méthane (PACM), 2,2-bis-(4-amino-cyclohexyl)-propane (PACP), 2,2-bis-(4-amino-3-méthyl-cyclohexyl)-propane (MACP), bis-(4-amino-3-éthyl-cyclohexyl)-méthane (EACM), 2,2-bis-(4-amino-3-éthyl-cyclohexyl)-propane (EACP), bis-(4-amino-3,5-diméthy-cyclohexyl)-méthane (TMACM), 2,2-bis-(4-amino-3,5-dimé-thy-cyclohexyl)-propane (TMACP) et leurs mélanges, dans laquelle le bis-(4-amino-3-méthyl-cyclohexyl)-méthane (MACM), bis-(4-amino-cy-clohexyl)-méthane (PACM) et leurs mélanges sont particulièrement préférés ; et/ou
le monomère (a3) est un acide dicarboxylique aromatique avec 6 à 36 atomes de carbone, lequel est de préférence choisi dans le groupe constitué par l'acide téréphtalique (TPS), l'acide naphtalènedicarboxylique (NDA), y compris l'acide 1,5-naphtalènedicarboxylique et l'acide 2,6-naphtalènedicarboxylique, l'acide isophtalique (IPS), les acides biphényl-dicarboxyliques, de préférence l'acide biphényl-2,2'-dicarboxylique, l'acide 4,4'-diphényldicarboxylique, l'acide 3,3'-diphényldicarboxylique, l'acide 4,4'-diphényl-étherdicarboxylique, l'acide 4,4'-diphénylméthanedicarboxylique et l'acide 4,4'-diphénylsulfone-dicarboxylique, l'acide 1,5-anthracènedicarboxylique, l'acide p-terphé-nylène-4,4"-dicarboxylique et l'acide 2,5-pyridinedicarboxylique et leurs mélanges, dans laquelle l'acide téréphtalique et l'acide isophtalique et leurs mélanges sont particulièrement préférés ; et/ou
le monomère (a4) est un acide dicarboxylique aliphatique acyclique, linéaire ou ramifié avec 10 à 14 atomes de carbone, lequel est de préférence choisi dans le groupe constitué par l'acide décane-dioïque, l'acide undécanedioïque, l'acide dodécanedioïque, l'acide tri-décanedioïque, l'acide tétradécanedioïque et leurs mélanges, dans laquelle de préférence encore l'acide dodécanedioïque et de manière particulièrement préférée exclusivement l'acide dodécanedioïque est utilisé.

4. Matière à mouler en polyamide selon l'une quelconque des revendications précédentes, **caractérisée en ce que**
un mélange d'acide téréphtalique et d'acide isophtalique, de préférence dans un rapport molaire de 2:1 à 1:2, en particulier dans un rapport de 1,5:1 à 1:1,5, est utilisé comme monomère (a3), dans laquelle de préférence encore un mélange équimolaire d'acide téréphtalique et d'acide isophtalique est utilisé.

5. Matière à mouler en polyamide selon l'une des revendications précédentes, **caractérisée en ce que**
le pourcentage de monomère (a1) dans le copolyamide se situe dans la plage de 55 à 80 % en moles, de préférence dans la plage de 60 à 77 % en moles ; et/ou le pourcentage de monomère (a2) dans le copolyamide se situe dans la plage de 20 à 45 % en moles, de préférence dans la plage de 23 à 40 % en moles ;
dans laquelle les pourcentages des monomères (a1) et (a2) sont rapportés à la somme des diamines utilisées et se complètent au total à 100 % en moles ; et/ou
le pourcentage de monomère (a3) dans le copolyamide se situe dans la plage de 50 à 80 % en moles, de préférence dans la plage de 60 à 75 % en moles ; et/ou le pourcentage de monomère (a4) dans le copolyamide se situe dans la plage de 20 à 50 % en moles, de préférence dans la plage de 25 à 40 % en moles ;
dans laquelle les pourcentages des monomères (a3) et (a4) sont rapportés à la somme des acides dicarboxyliques utilisés et se complètent au total à 100 % en moles.

6. Matière à mouler en polyamide selon l'une quelconque des revendications précédentes, **caractérisée en ce que**
le monomère (a1) est choisi parmi la 1,6-hexaméthylènediamine ;
le monomère (a2) est choisi dans le groupe constitué par le bis-(4-amino-3-méthyl-cyclohexyl)-méthane (MACM), bis-(4-amino-cyclo-hexyl)-méthane (PACM) et leurs mélanges, de préférence comme exclusivement bis-(4-amino-3-méthyl-cyclohexyl)-méthane MACM ;
le monomère (a3) est choisi dans le groupe constitué par l'acide téréphtalique, l'acide isophtalique et leurs mélanges, de préférence un mélange dans un rapport de 1,5:1 à 1:1,5, de manière particulièrement préférée un mélange équimolaire ;
le monomère (a4) est choisi parmi l'acide dodécanedioïque ;
dans laquelle de préférence les pourcentages des monomères sont choisis comme suit :
(a1) dans la plage de 60 à 75 % en moles ;
(a2) dans la plage de 25 à 40 % en moles ;
(a3) dans la plage de 60 à 75 % en moles ;
(a4) dans la plage de 25 à 40 % en moles ;
dans laquelle les pourcentages des monomères (a1) et (a2) sont rapportés à la somme des diamines utilisées et se complètent au total à 100 % en moles ; et
dans laquelle les pourcentages des monomères (a3) et (a4) sont rapportés à la somme des acides dicarboxyliques utilisés et se complètent au total à 100 % en moles.

7. Matière à mouler en polyamide selon l'une quelconque des revendications précédentes, **caractérisée en ce que**
les additifs (C) sont choisis dans le groupe constitué par les stabilisants inorganiques et organiques, en particulier les antioxydants, les antiozonants, les agents anti-UV, en particulier les stabilisants UV, les absorbeurs UV ou les agents antisolaires, les lubrifiants, les colorants, les agents de marquage, les pigments, le noir de carbone, le graphite, le graphène, les nanotubes de carbone, les agents photochromiques, les antistatiques, les agents de démoulage, les catalyseurs de condensation, les régulateurs de chaîne, les agents antimousses, les agents antiadhérents, les additifs d'allongement de chaîne, les azurants optiques, les absorbeurs d'infrarouge, les absorbeurs d'infrarouge proche, les retardateurs de flamme halogénés, les retardateurs de flamme non halogénés, les phyllosilicates naturels, les phyllosilicates synthétiques, les pigments métalliques, les paillettes métalliques, les particules revêtues de métal, les charges particulaires, les charges fibreuses, les charges à l'échelle nanométrique avec un diamètre de particule (*d₉₅*) de maximum 100 nm, déterminé par diffraction laser selon la norme ISO 13320 (2009), et leurs mélanges.

8. Matière à mouler en polyamide selon la revendication 7, **caractérisée en ce que**
les charges fibreuses sont choisies dans le groupe constitué par les fibres de verre, les fibres de carbone, les fibres métalliques, les fibres d'aramide, les fibres végétales, les fibres de cellulose, en particulier les fibres de nanocellulose, les fibres polymères, les trichites, les fibres minérales et leurs mélanges, de préférence les fibres de carbone, les fibres métalliques, les fibres d'aramide, les fibres végétales, les fibres de cellulose, en particulier les fibres de nanocellulose, les fibres polymères, les trichites, les fibres minérales et leurs mélanges.

9. Matière à mouler en polyamide selon l'une quelconque des revendications précédentes, **caractérisée en ce que**
le polyamide semi-cristallin (B) est choisi dans le groupe constitué par le PA 516, le PA 612, le PA 6/12, le PA 616, le PA 1012, le PA 1014, le PA 1016 et leurs mélanges, et est de préférence choisi dans le groupe constitué par le PA 516, le PA 612, le PA 6/12, le PA 616, le PA 1016 et leurs mélanges et est de préférence encore le PA 612 ou le PA 6/12

10. Matière à mouler en polyamide selon l'une quelconque des revendications précédentes, **caractérisée en ce que**
la matière à mouler en polyamide contient exactement un copolyamide (A) et exactement un polyamide semi-cristallin (B).

11. Matière à mouler en polyamide selon l'une quelconque des revendications précédentes, **caractérisée en ce que**
le trouble de la matière de moulage en polyamide mesuré selon la norme ASTM D1003 sur un corps moulé fabriqué à partir de la matière à mouler en polyamide (plaques de 2 mm d'épaisseur avec largeur et longueur : 60 x 60 mm) < 15 %, de préférence < 10 %, de préférence encore < 8 % et idéalement < 1,0 ; et/ou
la transparence mesurée sur un corps moulé fabriqué à partir de la matière à mouler en polyamide (plaques de 2 mm d'épaisseur avec largeur et longueur : 60 x 60 mm) selon la norme ASTM D1003 est d'au moins 80 %, de préférence d'au moins 85 % et de préférence encore d'au moins 90 %.

12. Matière à mouler en polyamide selon l'une quelconque des revendications précédentes, **caractérisée en ce qu'**un échantillon de la matière à mouler en polyamide
présente un module d'élasticité en traction déterminé selon la norme ISO 527 d'au moins 2 000 MPa, de préférence d'au moins 2 100 MPa et de préférence encore d'au moins 2 150 MPa ; et/ou
présente une résistance à la fissuration sous contrainte dans le diéthylène glycol déterminée selon la norme DIN 53449-3 (1984) méthode de la bande de flexion d'au moins 12 MPa, de préférence d'au moins 22 MPa et de préférence encore d'au moins 27 MPa ; et/ou
présente une résistance à la fissuration sous contrainte dans le toluène, déterminée selon la norme DIN 53449-3 (1984) méthode de la bande de flexion d'au moins 17 MPa, de préférence d'au moins 27 MPa et de préférence encore d'au moins 30 MPa ; et/ou
présente une résistance à la fissuration sous contrainte dans le n-hexane déterminée selon la norme DIN 53449-3 (1984) méthode de la bande de flexion d'au moins 23 MPa, de préférence d'au moins 30 MPa et de préférence encore d'au moins 35 MPa.

13. Corps moulé pouvant être fabriqué à partir d'une matière à mouler en polyamide selon l'une quelconque des revendications 1 à 12.

14. Corps moulé selon la revendication 12, **caractérisé en ce que**
le corps moulé est choisi dans le groupe constitué par des éléments décoratifs, en particulier dans l'habitacle d'une automobile ou dans le domaine de la mode, articles de sport, en particulier chaussures de ski, semelles intermédiaires pour chaussures de sport, articles de loisirs, jouets, en particulier éléments de construction, briques, figurines ou modèles, articles ménagers, en particulier récipients, bols, coupes, boîtes, gobelets, biberons ou gourdes, composants d'ustensiles de cuisine, composants de lunettes, en particulier montures ou branches de lunettes, notamment pour lunettes de sécurité, lunettes de sport ou lunettes de ski, ferrures de meubles, semelles intérieures, pièces de construction et pièces visibles pour appareils dans le domaine sanitaire, hygiénique et cosmétique, pièces de chaussures de sécurité, en particulier capuchons, coupelles de filtre, hublots, débitmètres, disques de rupture, récipients, boîtiers ou pièces de boîtier pour appareils électriques et électroniques, en particulier pour rasoirs, épilateurs, appareils de mesure, clés à infrarouge, téléphones mobiles, lecteurs, assistants numériques personnels (PDA), smartphones ou supports de stockage, en particulier clés USB, housses de protection pour téléphones mobiles, pièces visibles dans le domaine de l'informatique et des télécommunications, tubes, tuyaux, feuilles et composants de cigarettes électroniques.

15. Utilisation des matières à mouler en polyamide selon l'une quelconque des revendications 1 à 12 pour la fabrication d'un corps moulé choisi dans le groupe constitué par des éléments décoratifs, en particulier dans l'habitacle automobile ou le domaine de la mode, articles de sport, en particulier chaussures de ski, semelles intermédiaires pour chaussures de sport, articles de loisirs, jouets, en particulier éléments de construction, briques, figurines ou modèles, articles ménagers, en particulier récipients, bols, coupes, boîtes, gobelets, biberons ou gourdes, composants d'ustensiles de cuisine, composants de lunettes, notamment montures ou branches de lunettes, notamment pour lunettes de sécurité, lunettes de sport ou lunettes de ski, ferrures de meubles, semelles intérieures, pièces de construction et pièces visibles pour appareils dans le domaine sanitaire, hygiénique et cosmétique, pièces de chaussures de sécurité, en particulier capuchons, coupelles de filtre, hublots, débitmètres, disques de rupture, récipients, boîtiers ou pièces de boîtier pour appareils électriques et électroniques, en particulier pour rasoirs, épilateurs, appareils de mesure, clés à infrarouge, téléphones mobiles, lecteurs, assistants numériques personnels (PDA), smartphones ou supports de stockage, en particulier clés USB, housses de protection pour téléphones mobiles, pièces visibles dans le domaine de l'informatique et des télécommunications, tubes, tuyaux, feuilles et composants de cigarettes électroniques.
